# EUROPEAN PATENT APPLICATION

(11) **EP 4 488 870 A1**
(43) Date of publication of application: **08.01.2025**
(21) Application number: 23183066.2
(22) Date of filing: 03.07.2023
(51) Int. Cl.: G06F 30/17, G06F 30/23, B03C 1/01, G06F 111/04, G06F 111/06, G06F 113/10

(54) **COMPUTER IMPLEMENTED METHOD FOR DESIGNING A COMPLEX PART OF AN IN-VITRO DIAGNOSTIC INSTRUMENT**

(71) Applicant: Roche Diagnostics GmbH, 68305 Mannheim (DE); F. Hoffmann-La Roche AG, 4070 Basel (CH)
(72) Inventor: Styger, Thomas, 6300 Zug (CH)
(74) Representative: Altmann Stößel Dick Patentanwälte PartG mbB

(57) **Abstract**

A computer implemented method for designing a complex part (112) of an in-vitro diagnostic instrument (114) is disclosed. The method comprises step i.retrieving at least one target constraint (118); step ii.retrieving at least one set of input parameters (122), wherein the input parameters (122) comprise at least one design target (124) for defining the complex part (112) of the in-vitro diagnostic instrument (114) and at least one constraint parameter of the complex part (112) of the in-vitro diagnostic instrument (114), step iii.determining at least one design solution (128) of the complex part (112) by using at least one iterative algorithm considering the input parameters (122), wherein in each iteration the iterative algorithm comprises determining at least one candidate complex part (132) of the in-vitro diagnostic instrument (114), comparing the candidate complex part (132) to the target constraint (118), and rating the candidate complex part (132) depending on the comparison, wherein the method comprises repeating step iii until a predefined number of iterations is reached and/or until the determined candidate complex part (132) fulfills the target constraint (118) at least within predefined tolerances, thereby determining the design solution (128) of the complex part (112) of the in-vitro diagnostic instrument (114).

Further disclosed are a method for manufacturing a complex part (112) of an in-vitro diagnostic instrument (114), a complex part (112) of an in-vitro diagnostic instrument (114), a computer program with program means for executing the method for designing a complex part (112) of an in-vitro diagnostic instrument (114), a non-transient computer-readable medium, a computer-readable storage medium, a printing data set, and a computer program for producing the printing data set.

## Description

### Technical Field

The present application refers to a computer implemented method for designing a complex part of an in-vitro diagnostic instrument, a method for manufacturing a complex part of an in-vitro diagnostic instrument, and a complex part of an in-vitro diagnostic instrument. The invention further relates to a computer program with program means for executing the method according to the invention, a non-transient computer-readable medium, a computer-readable storage medium, a printing data set, and a computer program for producing the printing data set.

### Background art

For designing and/or constructing of products and parts, typically computer-aided design (CAD) programs and processes are used. However, today's CAD solutions are largely designed for cubic and rotary components whose shapes can be produced economically using conventional manufacturing processes. With the development of additive manufacturing processes, most of the restrictions regarding geometry and/or material composition, which are generally set for conventional manufacturing processes, do not apply. Instead, additive manufacturing processes have made great progress and have long outgrown the stage of pure prototype construction. Thus, a different way of designing and/or constructing appears to be necessary. Many CAD software vendors have thus responded to this trend by offering solutions that help to more fully advantage of additive manufacturing processes, such as laser sintering, 3D printing and similar processes. However, steady development of manufacturing processes requires a steady improvement and adaption of designing methods and processes.

Moreover, it would be desirable that designing methods and processes take into account the field of application and corresponding acting forces and loads. For example, complex parts of in-vitro diagnostic instruments such as a magnetic glass particle (MGP)-mixer may suffer from vibrations acting on them. For example, due to imbalance caused by eccentrics, not only a MGP plate shakes, but the whole assembly (and the chassis in which it is embedded). Due to reduced mass when miniaturizing of complex parts of in-vitro diagnostic instruments this problem will be further intensified and may result in disturbing adjacent processes due to the vibrations. In addition, fatigue fractures on load-bearing components may be a problem.

US 2019/0283368 A1 describes a thermoplastic elastomer compound which includes hydrogenated styrenic block copolymer having a polyisoprene soft block, styrene-isobutylene-styrene block copolymer, tackifier having a softening point of at least about 80° C according to ASTM 6493, and, optionally, one or more additional thermoplastic elastomers. The compound has a Compound Tan Delta Peak Temperature (at 10 Hz) of at least 10° C and a Compound Tan Delta Peak Height (at 10 Hz) of at least 0.85 if no thermoplastic polyurethane is present and at least 0.60 if additional thermoplastic elastomer is present and includes thermoplastic polyurethane.

### Problem to be solved

It is therefore desirable to provide methods and devices, which address the abovementioned technical challenges. Specifically, methods, computer programs and devices shall be proposed, which allow generating of topology optimized complex parts for in-vitro diagnostic instruments.

### Summary

This problem is addressed by a computer implemented method for designing a complex part of an in-vitro diagnostic instrument, a method for manufacturing a complex part of an in-vitro diagnostic instrument, a complex part of an in-vitro diagnostic instrument, a computer program with program means for executing the method, a non-transient computer-readable medium, a computer-readable storage medium, a printing data set, and a computer program for producing the printing data set with the features of the independent claims. Advantageous embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect, a computer implemented method for designing a complex part of an in-vitro diagnostic instrument is proposed.

The term "computer implemented" as used herein is a broad term and is to be given its ordinary and customary meaning to a person of ordinary skill in the art and is not to be limited to a special or customized meaning. The term specifically may refer, without limitation, to a method involving at least one computer and/or at least one computer network or a cloud. The computer and/or computer network and/or a cloud may comprise at least one processor which is configured for performing at least one of the method steps of the method according to the present invention. Preferably each of the method steps is performed by the computer and/or computer network and/or a cloud. The method may be performed completely automatically, for example without user interaction. The term "automatically" as used herein is a broad term and is to be given its ordinary and customary meaning to a person of ordinary skill in the art and is not to be limited to a special or customized meaning. The term specifically may refer, without limitation, to a process, which is performed completely by means of at least one computer and/or computer network and/or a cloud and/or machine, for example without manual action and/or interaction with a user.

The term "in-vitro diagnostics" as used herein is a broad term and is to be given its ordinary and customary meaning to a person of ordinary skill in the art and is not to be limited to a special or customized meaning. For example, in-vitro diagnostics may comprise performing at least one test on a sample, e.g. on a biological sample that has been taken off the human body or animal body. For example, the test on the sample may comprise applying at least one reagent to the sample and monitoring a detectable reaction. As an example, for performing the in-vitro diagnostics, e.g. the at least one test on the sample, the in-vitro diagnostics instrument may be used, such as in a laboratory or other environment for performing scientific or technological research, experiments and/or measurements. For example, the in-vitro diagnostic instrument may be part of a clinical laboratory, a medical laboratory, a forensic laboratory or a blood bank.

The term "biological sample" as used herein is a broad term and is to be given its ordinary and customary meaning to a person of ordinary skill in the art and is not to be limited to a special or customized meaning. The term specifically may refer, without limitation, to at least one biological material that may potentially comprise at least one analyte of interest. For example, the biological sample may comprise a body fluid, such as blood, interstitial fluid, urine, saliva or other types of body fluids. For example, the biological sample may be or may comprise an aliquot of a substance such as a biological compound. For example, the biological sample may be or may comprise at least one biological specimen, such as one or more of: blood; blood serum; blood plasma; urine; saliva. The biological sample may be a liquid sample. For example, the liquid sample may be or may comprise at least one pure liquid, such as a liquid substance and/or a solution containing one or more liquid substances, comprising the biological substance. The liquid sample may be or may comprise a liquid mixture, such as a suspension, an emulsion and/or a dispersion of biological substances. The biological sample may be a solid sample, for example, at least one sample of tissue.

The term "in-vitro diagnostic instrument" as used herein is a broad term and is to be given its ordinary and customary meaning to a person of ordinary skill in the art and is not to be limited to a special or customized meaning. The term specifically may refer, without limitation, to an arbitrary device configured for performing in-vitro diagnostics such as analysis of the biological sample. The in-vitro diagnostic instrument may be one or more of a pre-analytic instrument, an analytic instrument, or a post-analytic instrument.

The term "complex part" as used herein is a broad term and is to be given its ordinary and customary meaning to a person of ordinary skill in the art and is not to be limited to a special or customized meaning. The term specifically may refer, without limitation, to an individual part combining and/or accumulating multiple components and/or one or more of their functions. For example, the complex part may accumulate the multiple components, e.g. their functions, into a single part. The complex part cannot be disassembled. For example, the complex part may be made in one piece, i.e. forming a single part, such that, non-destructive disassembly into individual components may not be possible. The multiple components whose functions may be combined and/or accumulated within the complex part may be components that usually have rigid interfaces , e.g. which may be connected by one or more of being glued, screwed, riveted and/or welded.

For example, the complex part may be an element of a magnetic glass particle (MPG) mixer of the in-vitro diagnostic instrument. The MPG mixer may comprise at least one support configured for holding the MPG mixer assembly together. The support may be configured for serving as interface to the other parts of the in-vitro diagnostic instrument. The MPG mixer may comprise at least one carrier, also denoted as shaker plate. The carrier may be configured for receiving and holding a MGP-cassette and for mixing the MGPs. The MPG mixer may comprise at least one electric motor. The motor may be configured for driving the carrier. The MGP mixer may be configured for mixing samples by means of shaking in one plane. For example, the mixing process may be performed using two eccentrics. Both eccentrics may be driven via a belt, each by a single electric motor. The motors can be controlled independently of each other. The resulting offset may be compensated by means of a linear guide. The MPG mixer may comprise additional components, such as one or more of at least one motor for driving receiving and/or opening the MGP-cassette, at least one RFID reader, at least one printed circuit board and the like. With respect to the MGP-cassette reference is made to EP 2 423 688 A1. For example, the complex part of the in-vitro diagnostic instrument comprises one or more of a carrier, a support, or a gear of a magnetic glass particle mixer. For example, the complex part may be or may comprise, e.g. single or in combination, one or more of the functions of a carrier, a support, or a gear of a magnetic glass particle mixer.

The term "designing" as used herein is a broad term and is to be given its ordinary and customary meaning to a person of ordinary skill in the art and is not to be limited to a special or customized meaning. The term specifically may refer, without limitation, to a procedure of planning and/or specifying an object or process. The procedure of designing, as an example, may comprise developing and/or defining at least one property of the object or process. The designing may comprise at least one optimization in terms of at least one target.

The term "designing a complex part" as used herein is a broad term and is to be given its ordinary and customary meaning to a person of ordinary skill in the art and is not to be limited to a special or customized meaning. The term specifically may refer, without limitation, to a procedure of planning and/or specifying a complex part. For example, the designing of a complex part may be or may comprise developing and/or defining at least one property of the complex part, such as, for example, a geometry and/or a shape and/or a material or a material composition. As an example, the complex part, for example an element of an MPG mixer of the in-vitro diagnostic instrument, e.g. the design solution of the complex part, at least in a manufacturable form, e.g. as a 3D-model and/or in one or more technical drawings, may be the result of designing the complex part, e.g. an output of the designing of the complex part.

The method steps may be performed in the given order or may be performed in a different order. Further, one or more additional method steps may be present which are not listed. Further, one, more than one or even all of the method steps may be performed repeatedly.

The method comprises
i. retrieving at least one target constraint;
ii. retrieving at least one set of input parameters, wherein the input parameters comprise at least one design target for defining the complex part of the in-vitro diagnostic instrument and at least one constraint parameter of the complex part of the in-vitro diagnostic instrument,
iii. determining at least one design solution of the complex part by using at least one iterative algorithm considering the input parameters, wherein in each iteration the iterative algorithm comprises determining at least one candidate complex part of the in-vitro diagnostic instrument, comparing the candidate complex part to the target constraint, and rating the candidate complex part depending on the comparison.

The method comprises repeating step iii until a predefined number of iterations is reached and/or until the determined candidate complex part fulfills the target constraint at least within predefined tolerances, thereby determining the design solution of the complex part of the in-vitro diagnostic instrument.

The term "retrieving" as used herein is a broad term and is to be given its ordinary and customary meaning to a person of ordinary skill in the art and is not to be limited to a special or customized meaning. The term specifically may refer, without limitation, to a process of a system specifically a computer system, of generating data and/or obtaining data from an arbitrary data source, such as from a data storage, from a network or from a further computer or computer system or cloud, and/or receiving the data, e.g. as user input via a human-machine interface. The retrieving specifically may take place by at least one computer interface, e.g. a communication interface, such as via a port, e.g. a serial or parallel port. The retrieving may comprise several sub-steps, such as the sub-step of obtaining one or more items of primary information and generating secondary information by making use of the primary information, such as by applying one or more algorithms to the primary information, e.g. by using a processor. Further, the retrieving may comprise obtaining data from one or more of a user input, at least one measurement, at least one calculation, literature, at least one handbook, knowledge, experience and at least one simulation.

The retrieving in step i. and/or in step ii. may be performed by using at least one communication interface. The term "communication interface" as used herein is a broad term and is to be given its ordinary and customary meaning to a person of ordinary skill in the art and is not to be limited to a special or customized meaning. The term specifically may refer, without limitation, to an item or element forming a boundary configured for transferring information. The communication interface may be configured for transferring information from a computational device, e.g. a computer, such as to send or output information, e.g. onto another device. Additionally or alternatively, the communication interface may be configured for transferring information onto a computational device, e.g. onto a computer, such as to receive information. The communication interface may provide means for transferring or exchanging information. The communication interface may provide a data transfer connection, e.g. Bluetooth, NFC, inductive coupling or the like. As an example, the communication interface may be or may comprise at least one port comprising one or more of a network or internet port, a USB-port and a disk drive. The communication interface may be at least one web interface.

The communication interface, e.g. a human-machine-interface, may be or may comprise a user interface via which a user can input data. The term "user interface" as used herein is a broad term and is to be given its ordinary and customary meaning to a person of ordinary skill in the art and is not to be limited to a special or customized meaning. The term may refer, without limitation, to a communication interface which is configured for interacting with its environment, such as for the purpose of unidirectionally or bidirectionally exchanging information, such as for exchange of one or more of data or commands. For example, the user interface may be a bi-directional interface. The user interface may be configured to share information with a user and to receive information by the user. The user interface, as an example, may comprise one or more of: a graphical user interface; a data interface, such as a wireless and/or a wire-bound data interface.

For example, the retrieving of the target constraint may comprise retrieving the target constraint from at least one data storage. The data storage may comprise at least one table or at least one lookup table comprising a plurality of target constraints.

The term "target constraint" as used herein is a broad term and is to be given its ordinary and customary meaning to a person of ordinary skill in the art and is not to be limited to a special or customized meaning. The term specifically may refer, without limitation, to a characteristic or specification, which is targeted and/or aimed at when designing the complex part. The target constraint, also referred to as a target criterion, may be or may comprise at least one reference characteristic and/or property with which a characteristic of the complex part is compared. For example, the target constraint comprises at least one constraint selected from the group consisting of: a geometry constraint; a topology constraint; a pressure constraint; a shear force constraint; a mechanical stability constraint; a strength constraint, such as a tensile strength constraint; a weight constraint; a force distribution constraint; surface property constraint; a production machine constraint; a production constraint; and an economic constraint. The target constraint may be a parameter influencing a further characteristic and/or behavior of the complex part. For example, the target constraint may be a parameter relating to fluid dynamics such as a pressure drop, influencing turbulences, or conveying laminar flows, which influence a mixing ratio of a cassette of the MPG-mixer. As an example, the target constraint may comprise at least one static target, such as a constant and/or timely unchanging value. Additionally or alternatively, the target constraint may comprise at least one dynamic target, such as at least one varying and/or developing value, e.g. according to a predefined progress and/or development. For example, the dynamic target may be or may comprise at least one characteristic changing its value according to a predefined function, e.g. a function of time and/or space and/or of a further parameter, such as temperature and humidity. Additionally or alternatively, the dynamic target may be or may comprise a constraint for which no predefined developing and/or changing function may be available, such as to an improvement, e.g. a reduction of stresses can be reduced, a maximized stiffness, a minimized material consumption and/or component weight.

The term "input parameter" as used herein is a broad term and is to be given its ordinary and customary meaning to a person of ordinary skill in the art and is not to be limited to a special or customized meaning. The term specifically may refer, without limitation, to an input value for the iterative algorithm and/or data that can be filled into the iterative algorithm. The iterative algorithm may be configured for generating and/or determining the design solution of the complex part based on the input parameters, e.g. on the values. The set of input parameters may comprise a plurality of input parameters.

The input parameters comprise at least one design target for defining the complex part of the in-vitro diagnostic instrument. The term "design target" as used herein is a broad term and is to be given its ordinary and customary meaning to a person of ordinary skill in the art and is not to be limited to a special or customized meaning. The term specifically may refer, without limitation, to a starting point for the process of designing the complex part. The design target may be an arbitrary primary and/or initial two-dimensional and/or three-dimensional form or shape. The design target may be or may comprise a three-dimensional basic type of the complex part. The design target may be an initial geometry for the complex part. For example, the design target may be a predefined basic type of the complex part, for example a previously developed structure and/or form. As an example, the design target may have or may comprise features that may be targeted to be present in the complex part, such as a lattice structure. The design target may be a two-dimensional and/or three-dimensional structure, which may be described by using geometric forms, such as one or more of at least one cuboid, at least one cube, at least one cylinder or the like. Additionally or alternatively, the design target may be retrieved as one or more of at least one mathematical equation, at least one vector and at least one matrix. Additionally or alternatively, the target design may be a predefined and/or pre-existing geometry, such as a design solution determined previously in step iii.

The design target for defining the complex part of the in-vitro diagnostic instrument may comprise at least one set of shaping geometry parameters defining a shaping geometry of the complex part and/or at least one starting digital model of the complex part.

The term "shaping geometry parameter" as used herein is a broad term and is to be given its ordinary and customary meaning to a person of ordinary skill in the art and is not to be limited to a special or customized meaning. The term specifically may refer, without limitation, to any parameter defining a shape of the shaping geometry, such as a digital description of the digital model, for example a preliminary and/or seed shape. The shape may be an external boundary or external surface of the shaping geometry, for example an envelope. The set of shaping geometry parameters defining a shaping geometry of the complex part may comprise a number of shaping parameters and/or starting values of shaping geometry parameters. The shaping geometry parameters may comprise at least one parameter selected from the group consisting of: length, width, height, at least one parameter defining a pattern structure of the complex part, at least one parameter characterizing a type of the complex part such as carrier, support, or gear, lattice structures and other structures of the complex part.

The retrieving of the set of shaping geometry parameters may comprise receiving the set of shaping geometry parameters from at least one data storage. The data storage may comprise at least one table or at least one lookup table comprising a plurality of different starting geometries and relating shaping geometry parameters.

The term "digital model" as used herein is a broad term and is to be given its ordinary and customary meaning to a person of ordinary skill in the art and is not to be limited to a special or customized meaning. The term specifically may refer, without limitation, to a digital representation, e.g. a two or three-dimensional representation, of any surface of an object. The starting digital model may be an initial digital model and/or a predefined and/or pre-existing digital model such as a design solution determined previously in step iii. The starting digital model may be or may comprise a computer-generated digital model, e.g. by using at least one algorithm dedicated to generating digital models and/or by scanning of an object and transforming scanned data into a digital model. For example, the method may comprise determining the starting digital model by using the set of shaping geometry parameters within at least one computer-aided design tool. As an example, the set of shaping geometry parameters may be used, e.g. within the at least one computer-aided design tool, to set the starting digital model, e.g. an initial digital representation of the design target. For example, the starting digital model may be based on a DXF-File or the like retrieved in step ii., e.g. as part of the at least one set of input parameters.

The input parameters comprise at least one constraint parameter of the complex part of the in-vitro diagnostic instrument. The term "constraint parameter" as used herein is a broad term and is to be given its ordinary and customary meaning to a person of ordinary skill in the art and is not to be limited to a special or customized meaning. The term specifically may refer, without limitation, to at least one boundary condition for the design solution. For example, the at least one constraint parameter of the complex part may comprises at least one of product properties, available build space, potential materials, potential manufacturing processes or cost targets. The input parameters may comprise a plurality of constraint parameters.

The term "design solution of the complex part" as used herein is a broad term and is to be given its ordinary and customary meaning to a person of ordinary skill in the art and is not to be limited to a special or customized meaning. The term specifically may refer, without limitation, to at least one result or outcome of the iterative algorithm. The design solution may comprise a set of parameters defining one or more of geometry, shape, material, or structure of the complex part. The design solution may refer to the outcome of the computer implemented method for designing a complex part of an in-vitro diagnostic instrument. As an example, the design solution, e.g. in the method, may be present in the form of virtual model, such as a two-dimensional and/or three-dimensional model. For example, the design solution may be providable, e.g. by a processor involved in performing the method, in a computer-readable format, such as in a data format readable by a processor, e.g. in the form of a 3D-file.

The determining at least one design solution in step iii. may be performed by using at least one processor. The term "processor" as used herein is a broad term and is to be given its ordinary and customary meaning to a person of ordinary skill in the art and is not to be limited to a special or customized meaning. The term specifically may refer, without limitation, to an arbitrary logic circuitry configured for performing basic operations of a computer or system, and/or, generally, to a device which is configured for performing calculations or logic operations. In particular, the processor may be configured for processing basic instructions that drive the computer or system. As an example, the processor may comprise at least one arithmetic logic unit (ALU), at least one floating-point unit (FPU), such as a math coprocessor or a numeric coprocessor, a plurality of registers, specifically registers configured for supplying operands to the ALU and storing results of operations, and a memory, such as an L1 and L2 cache memory. In particular, the processor may be a multi-core processor. Specifically, the processor may be or may comprise a central processing unit (CPU). Specifically, the processor may be or may comprise at least one Graphics Processing Unit (GPU). Additionally or alternatively, the processor may be or may comprise a microprocessor, thus specifically the processor's elements may be contained in one single integrated circuitry (IC) chip. Additionally or alternatively, the processor may be or may comprise one or more application-specific integrated circuits (ASICs) and/or one or more field-programmable gate arrays (FPGAs) and/or one or more tensor processing unit (TPU) and/or at least one digital signal processor (DSP), and/or at least one system on a chip (SoC), and/or neuromorphic processor unit (NPU), and/or one or more chip, such as a dedicated machine learning optimized chip, or the like. The processor may be at least partially cloud based.

The term "iterative algorithm" as used herein is a broad term and is to be given its ordinary and customary meaning to a person of ordinary skill in the art and is not to be limited to a special or customized meaning. The term specifically may refer, without limitation, to an algorithm comprising at least one iteration. Each iteration may comprise the named substeps, i.e. determining at least one candidate complex part of the in-vitro diagnostic instrument, comparing the candidate complex part to the target constraint, and rating the candidate complex part depending on the comparison. The iterative algorithm may comprise a plurality of loops. In an initial loop, the input parameters retrieved in step ii may be used as start point.

The iterative algorithm may be designed for considering one or more of: at least one unchangeable area such as due to predefined interfaces to other components; acting forces; kinematics; predefined fixation points; manufacturing method; material; accessibility of tools during production and/or assembly; stackability; or nesting of individual components, e.g. for efficient logistics. The iterative algorithm may be designed for considering element used in the manufacturing method such as one or more of two axis CNC, five axis CNC, CNC lathe, casting tools with and without slides and the like. This can allow further optimizing the process, e.g. in order to allow costs and/or upscaling in quantity.

For example, the iterative algorithm may comprise at least one repetition of the named steps, e.g. a plurality of repetitions which may be performed in subsequent loops. The loops may be performed successively, e.g. one after the other, wherein an outcome of the previous loop may be used as input parameters for the next loop. For example, multipliers may be used, e.g. to enforce dispersion in the solution landscape. This can allow preventing local minima or maxima. The resulting "noise" of the resolution accuracy can be influenced. For example, sometimes a greater variation is desired, e.g. concept phase, whereas sometimes an exact unambiguous solution is desired. Thus, the iterative algorithm may be based on a "classical" iteration in which a single solution is generated in each iteration and a sequence of solutions of successive iterations approaches an optimal solution.

The iterative algorithm may comprise a topology optimization. For example, the topology optimization may comprise iteratively determining a geometry of the complex part. The topology optimization may use the input parameter, e.g. the design target and the constrain parameter. The topology optimization may comprise defining a construction space as a basis for the topology optimization considering acting forces and loads for determining an optimal geometry. The topology optimization may comprise performing in iterations and alternately at least one Finite-Element-Method (FEM) analysis and at least one material reduction operation. The iterative algorithm may consider during the iterations one or more of demolding directions (for castings), building directions (additive processes), accessibility with the tool (chip removal processes). The FEM analysis and the material reduction operation may be performed until a predefined number of iterations is reached and/or until the determined candidate complex part fulfills the target constraint at least within predefined tolerances. The iterative algorithm may consider a plurality of target constraints. The target constraints may be interdependent. The target constrains may have an order of priority. The priority may be considered using different weighting. For example, it is more important that demolding is possible than achieving the mass specification.

The term "candidate complex part" as used herein is a broad term and is to be given its ordinary and customary meaning to a person of ordinary skill in the art and is not to be limited to a special or customized meaning. The term specifically may refer, without limitation, to a preliminary result of a simulation of the complex part under consideration of the input parameters. The candidate complex part may be a virtual prototype of the complex part.

As used herein, the term "simulation of the complex part" is a broad term and is to be given its ordinary and customary meaning to a person skilled in the art and is not to be limited to a special or customized meaning. The term specifically may refer, without limitation, to a process of applying at least one simulation tool, such as an algorithm and/or a neural network, to the input parameters for the purpose of determining a design solution of the complex part. In a subsequent iteration, a value of at least one parameter of a set of parameters may be varied, e.g. depending on an outcome of the comparison of the candidate complex part to the target constraint. The parameter(s) and/or value(s) of the parameter(s) may be varied by following one or more of a preset and/or a predetermined pattern, a preset and/or a predetermined algorithm, a preset and/or a predetermined mathematical set of rules, a preset and/or a predetermined method or a preset and/or a predetermined protocol, and/or may be varied randomly. The adapting of the shaping geometry parameter may comprise at least one material reduction operation.

The term "comparing the candidate complex part to the target constraint" as used herein is a broad term and is to be given its ordinary and customary meaning to a person of ordinary skill in the art and is not to be limited to a special or customized meaning. The term specifically may refer, without limitation, to comparing at least one physical and/or mechanical property and/or characteristic of the candidate complex part to the target constraint.

For example, the comparing may comprise analyzing the candidate complex part by simulating a use of the complex part by applying at least one numerical simulation on the candidate complex part thereby determining at least one physical and/or mechanical property of the candidate complex part of the in-vitro diagnostic instrument. The term "simulating a use of the complex part" as used herein is a broad term and is to be given its ordinary and customary meaning to a person of ordinary skill in the art and is not to be limited to a special or customized meaning. The term specifically may refer, without limitation, to simulating a behavior of the complex part under at least one test condition such as under one or more of at least one force, deformation, stress, a condition such as defined by a temperature, or loads.

The physical and/or mechanical property may comprises at least one property selected from the group consisting of: weight; material; tension property; pressure property; shear property; rigidity; relative stiffness; damping properties; hardness; energy dissipation; properties under compression; properties under deformations; inertia; thermal conductivity, elasticity, fatigue strength, rust resistance, suitability for manufacturing processes, e.g. suitability relating to machining, casting, bending, and the like.

The analyzing of the candidate complex part may comprise discretizing the candidate complex part into a mesh comprising a finite number of mesh elements. The analyzing may comprise using at least one Finite-Element-Method (FEM) simulation, also called FEM analysis. The FEM simulation may be configured for determining, e.g. and visualizing, a behavior of the candidate complex part under one or more of at least one force, deformation, stress, a condition such as defined by a temperature, or loads. The FEM simulation may be configured for identifying failures such as weak points. The FEM simulation may be configured for determining the behavior of the candidate complex part statically or a development over time. The FEM simulation may be based on one or more of voxels, point clouds, B-Rep, SDF and the like.

The comparing of the candidate complex part to the target constraint may comprise comparing the determined physical and/or mechanical property to the target constraint and adapting at least one of the shaping geometry parameters depending on the comparison. The method comprises repeating step iii until a predefined number of iterations is reached and/or until the determined candidate complex part fulfills the target constraint at least within predefined tolerances. The method may comprise repeating step iii. with adapted shaping geometry parameters until the determined physical and/or mechanical property fulfills the target constraint at least within predefined tolerances, thereby determining the design solution of the complex part of the in-vitro diagnostic instrument with an adapted set of shaping geometry parameters for which the target constraint is fulfilled at least within predefined tolerances. For example, the predefined number of iterations may depend on an initial situation, e.g. may be between 2 and 80. For example, the method may comprise aborting after e.g. 60 iterations. The method may comprise a manual correction, which can be used as new starting geometry. The term "fulfill" as used herein is a broad term and is to be given its ordinary and customary meaning to a person skilled in the art and is not to be limited to a special or customized meaning. The term specifically may refer, without limitation, to an achievement of an arbitrary goal, such as complying with at least one predefined or preset criterion. Thus, the term "fulfills at least within predefined tolerances" specifically may refer, without limitation, to an arbitrary status of reaching a predefined goal by complying with the at least one predefined or preset criterion, wherein a predetermined tolerance may be applied when determining the achievement. The term "fulfills the target constraint at least within predefined tolerances" may refers to the fact that the target constraint is completely fulfilled wherein deviations are possible within the predefined tolerances. Specifically, the target constraint may be considered to be fulfilled so long as the determined physical and/or mechanical property of the candidate complex part and the target constraint differ from each other by no more than 50%, preferably by no more than 20%, more preferably by no more than 10%. For example, an termination criterion of the simulation may be achieving of the target constrains. Additionally or alternatively, at least one time limit may be used, e.g. a simulation is terminated after 24 hours. This can allow controlling costs, if e.g. calculations are performed in the cloud or a local PC is used to capacity for too long.

Additionally or alternatively, the iterative algorithm, e.g. the determining of the candidate complex part and the comparing of the candidate complex part, may be performed using at least one genetic algorithm. The iterative algorithm using a genetic algorithm may comprise generating a population of solutions in each iteration. In each iteration randomly solutions from the previous population may be selected. These selected solutions may be used as parents to produce children for the next population generation. The optimal solution may be reached after successive iterations. For example, one of the interdependent parameters may be selected and its weight may be minimized or maximized, e.g. to a local and/or global optimum (maxima or minima of functions). With respect to optimization reference is made e.g. to en.wikipedia.org/wiki/Mathematical_optimization.

The term "rating the candidate complex part depending on the comparison" as used herein is a broad term and is to be given its ordinary and customary meaning to a person of ordinary skill in the art and is not to be limited to a special or customized meaning. The term specifically may refer, without limitation, to categorizing the candidate complex part, e.g. as suitable design solution for prototyping or as intermediate solution for a next iteration, and/or assigning at least one score indicating conformity with the target constraint, e.g. from 1 (nonconformity) to 10 (complete conformity).

The method may comprises outputting the design solution obtained after repeating step iii for the predefined number of iterations and/or for which the target constraint is fulfilled at least within predefined tolerances. The term "outputting" as used herein is a broad term and is to be given its ordinary and customary meaning to a person of ordinary skill in the art and is not to be limited to a special or customized meaning. The term specifically may refer, without limitation, to the process of making information available to another system, data storage, person or entity. As an example, the outputting may take place via one or more interfaces, such as a computer interface, a web interface or a human-machine interface. The outputting, as an example, may take place in one or more of a computer-readable format, a visible format or an audible format. The outputting of the design solution may comprise outputting at least one information about one or more of a distribution of height; a distribution of wall thickness; at least one length; a pattern structure; a general geometry and/or shape; a material; a manufacturing process; a topology; a volume; a surface; a mass; a foam structures with open or closed cells; a lattice structure, such as a form and/or a position and/or a distribution and/or an extension of at least one cut-out and/or hole and/or web.

The method further may comprise prototyping the complex part of the in-vitro diagnostic instrument obtained after repeating step iii for the predefined number of iterations and/or for which the target constraint is fulfilled at least within predefined tolerances. The term "prototyping" as used herein is a broad term and is to be given its ordinary and customary meaning to a person of ordinary skill in the art and is not to be limited to a special or customized meaning. The term specifically may refer, without limitation, to the process of manufacturing a full-scale and functional model or form of an arbitrary element or object or generating of a virtual prototype. For example, a CAD model may be built into higher assemblies as an unfinished model. Simulated by FEM, cost calculations can be made with the obtained geometry, packings, etc. can be evaluated. These findings then can flow back into the optimization process. The prototype may be a model of the complex part and may be used for testing and/or verification of at least one characteristic or specification of the complex part. The prototype may be manufactured prior to a large-scale production process or a mass production process. A prototype may, for example, be produced or manufactured as a part of a development phase of the complex part. Thus, the prototyping of the complex part may specifically be performed before starting a large-scale production process or manufacturing of the complex part. The method may comprises validating the prototyped complex part by comparing at least one property of the prototyped complex part with at least one property of a simulated complex part and/or rating the prototyped complex part by using at least one property of the prototyped complex part in comparison to the at least one target constraint, e.g. in case of more than one target constraint to at least one of the target constraints.

In a further aspect of the present invention, a method for manufacturing a complex part of an in-vitro diagnostic instrument is disclosed. The method for manufacturing a complex part of an in-vitro diagnostic instrument is also be referred to as manufacturing method. The manufacturing method comprises designing the complex part of the in-vitro diagnostic instrument by using a method for designing a complex part as disclosed herein. Thus, for possible definitions of terms and possible embodiments, reference is made to the disclosure of the method for designing a complex part as disclosed above or as disclosed in further detail below.

The manufacturing method further comprises manufacturing the complex part of the in-vitro diagnostic instrument based on the designed complex part, i.e. on the design solution, by using at least one manufacturing process selected from the group consisting of: milling, such as computer numerical control milling; casting; molding; additive manufacturing, such as Powder Bed Fusion, Binder Jetting, Material Jetting, 3D printing; cutting, such as laser cutting and/or water jet cutting.

The manufacturing method may for example comprise manufacturing the complex part by one or more conventional ablative manufacturing processes, such as by milling, e.g. by computer numerical controlled milling, or cutting, such as laser cutting and/or water jet cutting, in which the component, i.e. the complex part, may be created from a solid material and/or block by removing material from the solid and/or block layer by layer. Additionally or alternatively, the manufacturing method may for comprise manufacturing the complex part by one or more conventional molding processes, such as by casting and/or molding, in which reusable and/or lost molds may be used for casting the component, i.e. the complex part. Further additionally or alternatively, the manufacturing method may for comprise manufacturing the complex part by one or more recently developed additive manufacturing processes, such as by Powder Bed Fusion, Binder Jetting, Material Jetting, 3D printing or the like, in which the component, i.e. the complex part, may be created by adding material layer by layer.

The manufacturing process may for example be selected by considering the design solution, e.g. of the complex part of the in-vitro diagnostic instrument as determined in the method for designing a complex part of an in-vitro diagnostic instrument as disclosed herein. As an example, the manufacturing process may be selected by taking into account a feasibility of manufacturing of the design solution of the design method as disclosed herein. For example, the manufacturing process may be selected according to the design solution's ability to be produced by using the process. Thus, the design solution as determined in the design method may be evaluated, e.g. automatically, according to predetermined and/or preset criteria and the manufacturing processes able to manufacture and/or produce the complex part may be selected and/or rated according to the evaluation of the design solution. The criteria used for the evaluation of the design solution's ability to be manufactured and/or produced by the manufacturing processes may for example be one or more of a size, a required tolerance, e.g. surface tolerances, and a presence or absence of undercuts. Further criteria may also be possible, such as one or more materials to be used for the complex part.

As an example, at least one material for manufacturing the complex part of the in-vitro diagnostic instrument may be selected by considering the design solution. The material may be or may comprise at least one material selected from the group consisting of: a metal material; e.g. steel and/or its alloys; a casting material; a non-ferrous metal material, such as aluminum, titanium and/or one or more of their alloys; an intrinsically lattice structured material, such as a lattice structured metal material, a material having a lattice structure characteristic, a material arrangeable in a lattice structure; a plastic material; a compound material; wood. In particular, the complex part may be or may comprise a lattice structured rigid material, such as a metamaterial, wherein a flexible characteristic, e.g. a flexible system, may be construed and/or constructed by design of the topology properties of the material, such that a flexibility is created that may not be present in the basis rigid material.

In a further aspect of the present invention, a complex part of an in-vitro diagnostic instrument is disclosed. The complex part is obtainable by using a method for manufacturing a complex part as disclosed herein. Thus, for possible definitions of terms and possible embodiments, reference is made to the disclosure of the method for manufacturing a complex part of an in-vitro diagnostic instrument, e.g. the manufacturing method, as disclosed above or as disclosed in further detail below.

The complex part may comprise at least one lattice structure. For example, the complex part may comprise a regular patterned structure or an irregular patterned structure. As an example, the complex part may be or may comprise at least one section and/or part having a lattice structure, such as having an intrinsic lattice structure, having a lattice structure characteristic, such as a deformable and/or elastic characteristic, and/or being arranged in a lattice structure, such as in a regular or irregular patterned structure.

In a further aspect of the present invention, a computer program is disclosed comprising instructions, which, when the program is executed by a processor, e.g. by a processor of a computer or computer network, cause the processor to perform at least step iii. of the method for designing a complex part as disclosed herein. Thus, for possible definitions of terms and possible embodiments, reference is made to the disclosure of the method for designing a complex part, e.g. to the description relating to step iii. of the method, as disclosed above or as disclosed in further detail below. In particular, the computer program may be configured for causing the processor to perform the determining of the at least one design solution of the complex part by using the at least one iterative algorithm as disclosed herein.

In a further aspect of the present invention, a computer-readable storage medium is disclosed comprising instructions, which, when the instructions are executed by a processor, e.g. by a processor of a computer or computer network, cause the processor to perform at least step iii. of the method for designing a complex part as disclosed herein. Thus, again, for possible definitions of terms and possible embodiments, reference is made to the disclosure of the method for designing a complex part, e.g. to the description relating to step iii. of the method, as disclosed above or as disclosed in further detail below. In particular, the computer-readable storage medium may be configured for causing the processor to perform the determining of the at least one design solution of the complex part by using the at least one iterative algorithm as disclosed herein.

In a further aspect of the present invention, a non-transient computer-readable medium is disclosed including instructions that, when executed by one or more processors, e.g. of a computer or computer network, cause the one or more processors to perform at least step iii. of the method for designing a complex part as disclosed herein. Thus, again, for possible definitions of terms and possible embodiments, reference is made to the disclosure of the method for designing a complex part, e.g. to the description relating to step iii. of the method, as disclosed above or as disclosed in further detail below.

In a further aspect of the present invention, a computer-readable data carrier is disclosed, specifically a non-transient storage medium, comprising instructions which, when the instructions are executed by a device for additive manufacturing, specifically by a 3D printing device, cause the device for additive manufacturing to produce a complex part as disclosed herein. Thus, for possible definitions of terms and possible embodiments, reference is made to the disclosure of the complex part as disclosed above or as disclosed in further detail below.

The term "device for additive manufacturing", also referred to as "additive manufacturing device", as used herein is a broad term and is to be given its ordinary and customary meaning to a person of ordinary skill in the art and is not to be limited to a special or customized meaning. The term specifically may refer, without limitation, to a manufacturing module and/or a manufacturing system that is set up to generate, under computer control, three-dimensional objects, for example parts and/or components, from one or more liquid and/or solid materials by means of a layer-by-layer assembly. The additive manufacturing device may comprise an interface, for example an STL interface, e.g. for data transmission, for example to read information and/or instructions stored on the computer-readable data carrier.

The term "computer-readable data carrier", also referred to as "data carrier", as used herein is a broad term and is to be given its ordinary and customary meaning to a person of ordinary skill in the art and is not to be limited to a special or customized meaning. The term specifically may refer, without limitation, to at least one non-transitory data storage device and/or to a non-transitory storage medium, such as a hardware data storage medium, on which computer-executable instructions are stored. As an example, the instructions may be stored on the data storage medium as a data structure which, after being loaded into a working and/or main memory of an additive manufacturing device, causes the latter to produce the complex part according to the invention. The computer-readable data carrier may be or may comprise a storage medium readable by the additive manufacturing device, such as a random-access memory (RAM) and/or a read-only memory (ROM). As an example, the computer-readable storage medium may comprise printing information, for example a printing data set as outlined further below.

For example, the instructions on the data carrier may be in the form of a 3-D file, such as an STL format, a DXF format, a VRML format, an OBJ format, a 3DS format, an OFF format, an AMF format, a 3MF format, or similar file formats readable by additive manufacturing devices. Alternatively or additionally, the instructions may be present on the data carrier as a layer file, for example in a layer file format, for example as a CLI file, as an SLC file, or in a similar file format comprising information about a plurality of cutting contours for layer-by-layer fabrication of the holder in the additive manufacturing device.

In a further aspect of the present invention, a printing data set is disclosed, comprising information which, when provided to a device for additive manufacturing, specifically a 3D printing device, enable the device for additive manufacturing to produce a complex part as disclosed herein. Thus, for possible definitions of terms and possible embodiments, reference is made to the disclosure of the complex part as disclosed above or as disclosed in further detail below.

The term "printing data set" as used herein is a broad term and is to be given its ordinary and customary meaning to a person of ordinary skill in the art and is not to be limited to a special or customized meaning. The term specifically may refer, without limitation, to data comprising information for producing a three-dimensional object in the additive manufacturing device, such as an instruction manual. As an example, the printing data set may comprise instructions on how to control a print head of the additive manufacturing device and/or how much material to apply per layer. For example, the printing data set may be in a G-code format. For example, the printing data set may be adapted to a particular additive manufacturing device, for example of a particular type and/or a particular manufacturer.

In a further aspect of the present invention, a computer program comprising instructions which, when the program is executed by a computer or computer network, cause the computer or computer network to produce the printing data set as disclosed herein. Thus, for possible definitions of terms and possible embodiments, reference is made to the disclosure of the printing data set as disclosed above or as disclosed in further detail below.

As an example, the instructions of the computer program, for example the instructions present or stored in the computer program, may comprise a digital representation of the complex part, in particular the complex part according to the invention and described herein, i.e. according to one of the embodiments mentioned above or according to one of the embodiments described in more detail below. For example, the digital representation of the complex part may comprise a 3D model of the complex part, such as the design solution. For example, the computer program may be arranged to create and/or generate the print data set from the digital representation of the holder.

In a further aspect of the present invention, an in-vitro diagnostic instrument is disclosed herein. The in-vitro diagnostic instrument comprises the complex part, in particular the complex part according to the invention and described herein, i.e. according to one of the embodiments mentioned above or according to one of the embodiments described in more detail below. Thus, for possible definitions of terms and possible embodiments, reference is made to the disclosure of the complex part as disclosed above or as disclosed in further detail below. The complex part comprised by the in-vitro diagnostic instrument is one or more of a carrier of a magnetic glass particle mixer, a support of a magnetic glass particle mixer and a gear of a magnetic glass particle mixer. Alternatively, the complex part comprised by the in-vitro diagnostic instrument comprises at least one function of one or more of a carrier of a magnetic glass particle mixer, a support of a magnetic glass particle mixer and a gear of a magnetic glass particle mixer.

The methods and devices according to the present invention may provide a large number of advantages over known methods and devices. As an example, the proposed methods and devices may allow for a fast design and/or a less time-consuming production of complex parts and may thus ensure rapid availability of the components and may enable revisions during the product life cycle. Further, the proposed methods and devices may allow for streamlining development processes. Furthermore, the proposed methods and devices may, compared to known methods and devices, allow for simplifying production, assembly, warehousing, documentation, service and quality assurance. The method can be combined with predictive maintenance. This can allow that weak points can be eliminated in the next revision. The method may be used for several industry 4.0 applications. The method can be combined with a swarm intelligence technique.

Summarizing and without excluding further possible embodiments, the following embodiments may be envisaged:
Embodiment 1: Computer implemented method for designing a complex part of an in-vitro diagnostic instrument, wherein the method comprises
   i. retrieving at least one target constraint;
   ii. retrieving at least one set of input parameters, wherein the input parameters comprise at least one design target for defining the complex part of the in-vitro diagnostic instrument and at least one constraint parameter of the complex part of the in-vitro diagnostic instrument,
   iii. determining at least one design solution of the complex part by using at least one iterative algorithm considering the input parameters, wherein in each iteration the iterative algorithm comprises
      determining at least one candidate complex part of the in-vitro diagnostic instrument,
      comparing the candidate complex part to the target constraint, and
      rating the candidate complex part depending on the comparison,
   wherein the method comprises repeating step iii until a predefined number of iterations is reached and/or until the determined candidate complex part fulfills the target constraint at least within predefined tolerances, thereby determining the design solution of the complex part of the in-vitro diagnostic instrument.
Embodiment 2: The method according to the preceding embodiment, wherein the complex part of the in-vitro diagnostic instrument comprises one or more of a carrier, a support, or a gear of a magnetic glass particle mixer.
Embodiment 3: The method according to any one of the preceding embodiments, wherein the target constraint comprises at least one constraint selected from the group consisting of: a geometry constraint; a topology constraint; a pressure constraint; a shear force constraint; a mechanical stability constraint; a strength constraint, such as a tensile strength constraint; a weight constraint; a force distribution constraint; surface property constraint; a production machine constraint; a production constraint; and an economic constraint.
Embodiment 4: The method according to any one of the preceding embodiments, wherein the retrieving comprises retrieving the target constraint from at least one data storage, wherein the data storage comprises at least one table or at least one lookup table comprising a plurality of target constraints.
Embodiment 5: The method according to any one of the preceding embodiments, wherein the design target for defining the complex part of the in-vitro diagnostic instrument comprises at least one set of shaping geometry parameters defining a shaping geometry of the complex part and/or at least one starting digital model of the complex part. Embodiment 6: The method according to the preceding embodiment, wherein the set of shaping geometry parameters defining a shaping geometry of the complex part comprises a number of shaping parameters and/or starting values of shaping geometry parameters.
Embodiment 7: The method according to any one of the two preceding embodiments, wherein the shaping geometry parameters comprise at least one parameter selected from the group consisting of: length, width, height, at least one parameter defining a pattern structure of the complex part, at least one parameter characterizing a type of the complex part, lattices, structures of the complex part.
Embodiment 8: The method according to any one of the three preceding embodiments, wherein the method comprises determining the starting digital model by using the set of shaping geometry parameters within at least one computer-aided design tool.
Embodiment 9: The method according to any one of the four preceding embodiments, wherein the retrieving of the set of shaping geometry parameters comprises receiving the set of shaping geometry parameters from at least one data storage, wherein the data storage comprises at least one table or at least one lookup table comprising a plurality of different starting geometries and relating shaping geometry parameters.
Embodiment 10: The method according to any one of the preceding embodiments, wherein the at least one constraint parameter of the complex part comprises at least one of product properties, available build space, potential materials, potential manufacturing processes or cost targets.
Embodiment 11: The method according to any one of the preceding embodiments, wherein the iterative algorithm comprises analyzing the candidate complex part by simulating a use of the complex part by applying at least one numerical simulation on the candidate complex part thereby determining at least one physical and/or mechanical property of the candidate complex part of the in-vitro diagnostic instrument.
Embodiment 12: The method according to the preceding embodiment, wherein the physical and/or mechanical property comprises at least one property selected from the group consisting of: weight; material; tension property; pressure property; shear property; rigidity; relative stiffness; damping properties; hardness; energy dissipation; properties under compression; properties under deformations; and inertia.
Embodiment 13: The method according to any one of the two preceding embodiments, wherein the analyzing of the candidate complex part comprises discretizing the candidate complex part into a mesh comprising a finite number of mesh elements.
Embodiment 14: The method according to any one of the three preceding embodiments, wherein the analyzing comprises using at least one Finite-Element-Method (FEM) simulation.
Embodiment 15: The method according to any one of the four preceding embodiments, wherein the comparing of the candidate complex part to the target constraint comprises comparing the determined physical and/or mechanical property to the target constraint and adapting at least one of the shaping geometry parameters depending on the comparison, wherein the method comprises repeating step iii. with adapted shaping geometry parameters until the determined physical and/or mechanical property fulfills the target constraint at least within predefined tolerances, thereby determining the design solution of the complex part of the in-vitro diagnostic instrument with an adapted set of shaping geometry parameters for which the target constraint is fulfilled at least within predefined tolerances.
Embodiment 16: The method according to the preceding embodiment, wherein the adapting of the shaping geometry parameter comprises at least one material reduction operation.
Embodiment 17: The method according to any one of the preceding embodiments, wherein the iterative algorithm comprises at least one genetic algorithm.
Embodiment 18: The method according to any one of the preceding embodiments, wherein the iterative algorithm is designed for considering one or more of: at least one unchangeable area such as due to predefined interfaces to other components; acting forces; kinematics; predefined fixation points; manufacturing method; material; accessibility of tools during production and/or assembly; stackability; or nesting of individual components
Embodiment 19: The method according to any one of the preceding embodiments, wherein the method comprises outputting the design solution obtained after repeating step iii for the predefined number of iterations and/or for which the target constraint is fulfilled at least within predefined tolerances.
Embodiment 20: The method according to the preceding embodiment, wherein the outputting of the design solution comprises outputting at least one information about one or more of a distribution of height; a distribution of wall thickness; at least one length; a pattern structure; a general geometry and/or shape; a material; a manufacturing process; a topology; a volume; a surface; a mass; a foam structures with open or closed cells; a lattice structure, such as a form and/or a position and/or a distribution and/or an extension of at least one cut-out and/or hole and/or web.
Embodiment 21: The method according to any one of the preceding embodiments, wherein the method further comprises prototyping the complex part of the in-vitro diagnostic instrument obtained after repeating step iii for the predefined number of iterations and/or for which the target constraint is fulfilled at least within predefined tolerances.
Embodiment 22: The method according to the preceding embodiment, wherein the method comprises validating the prototyped complex part by comparing at least one property of the prototyped complex part with at least one property of a simulated complex part and/or rating the prototyped complex part by using at least one property of the prototyped complex part in comparison to the at least one target constraint.
Embodiment 23: A method for manufacturing a complex part of an in-vitro diagnostic instrument, wherein the method comprises designing the complex part of the in-vitro diagnostic instrument by using a method for designing a complex part according to any one of the preceding embodiments, wherein the method further comprises manufacturing the complex part of the in-vitro diagnostic instrument based on the designed complex part, i.e. the design solution, by using at least one manufacturing process selected from the group consisting of: milling, computer numerical control milling; casting; molding; additive manufacturing, such as Powder Bed Fusion, Binder Jetting, Material Jetting, 3D printing; cutting, such as laser cutting and/or water jet cutting.
Embodiment 24: The method according to the preceding embodiment, wherein the manufacturing process is selected by considering the design solution, e.g. taking into account a feasibility of manufacturing of the design solution.
Embodiment 25: The method according to any one of the two preceding embodiments, wherein at least one material for manufacturing the complex part of the in-vitro diagnostic instrument is selected by considering the design solution, wherein the material is at least one material selected from the group consisting of: a metal material; e.g. steel and/or its alloys; a casting material; a non-ferrous metal material, such as aluminum, titanium and/or one or more of their alloys; an intrinsically lattice structured material, such as a lattice structured metal material, a material having a lattice structure characteristic, a material arrangeable in a lattice structure; a plastic material; a compound material; wood.
Embodiment 26: A complex part of an in-vitro diagnostic instrument, wherein the complex part is obtainable by using a method for manufacturing a complex part according to any one of the preceding embodiments referring to a method for manufacturing a complex part.
Embodiment 27: The complex part according to the preceding embodiment, wherein the complex part comprises at least one lattice structure, for example a regular or irregular patterned structure.
Embodiment 28: A computer program comprising instructions, which, when the program is executed by a processor, cause the processor to perform at least step iii. of the method for designing a complex part according to any one of the preceding embodiments referring to a method for designing a complex part.
Embodiment 29: A computer-readable storage medium comprising instructions, which, when the instructions are executed by a processor, cause the processor to perform at least step iii. of the method for designing a complex part according to any one of the preceding embodiments referring to a method for designing a complex part.
Embodiment 30: A non-transient computer-readable medium including instructions that, when executed by one or more processors, cause the one or more processors to perform at least step iii. of the method for designing a complex part according to any one of the preceding embodiments referring to a method for designing a complex part.
Embodiment 31: A computer-readable data carrier, specifically a non-transient storage medium, comprising instructions which, when the instructions are executed by a device for additive manufacturing, specifically a 3D printing device, cause the device for additive manufacturing to produce a complex part according to any one of the preceding embodiments referring to a complex part of an in-vitro diagnostic instrument.
Embodiment 32: A printing data set, comprising information which, when provided to a device for additive manufacturing, specifically a 3D printing device, enable the device for additive manufacturing to produce a complex part according to any one of the preceding embodiments referring to a complex part of an in-vitro diagnostic instrument. Embodiment 33: A computer program comprising instructions, which, when the program is executed by a computer or computer network, cause the computer or computer network to produce the printing data set according to the preceding embodiment.
Embodiment 34: An in-vitro diagnostic instrument configured for performing at least one test on a sample, wherein the in-vitro diagnostic instrument comprises at least one complex part according to any one of the preceding embodiments referring to a complex part, wherein the complex part is or comprises at least one function of one or more of a carrier of a magnetic glass particle mixer, a support of a magnetic glass particle mixer and a gear of a magnetic glass particle mixer.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows a flow chart of a schematic overview of a method for designing a complex part of an in-vitro diagnostic instrument;
- Figure 2: shows a flow chart of a schematic overview of a method for manufacturing a complex part of an in-vitro diagnostic instrument comprising a flow chart of a method for designing the complex part of the in-vitro diagnostic instrument;
- Figures 3 and 4: show an embodiment of a complex part in a top plane view (Figure 2) and a bottom plane view (Figure 3);
- Figure 5: shows a different embodiment of a complex part in a perspective view; and
- Figures 6 to 9: show top plane views of different embodiments of a complex part in an invitro diagnostic instrument.

### Detailed description of the embodiments

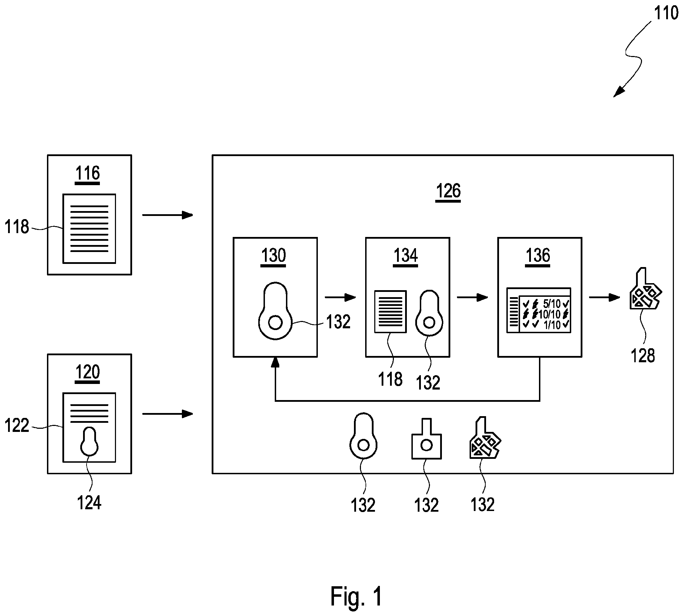

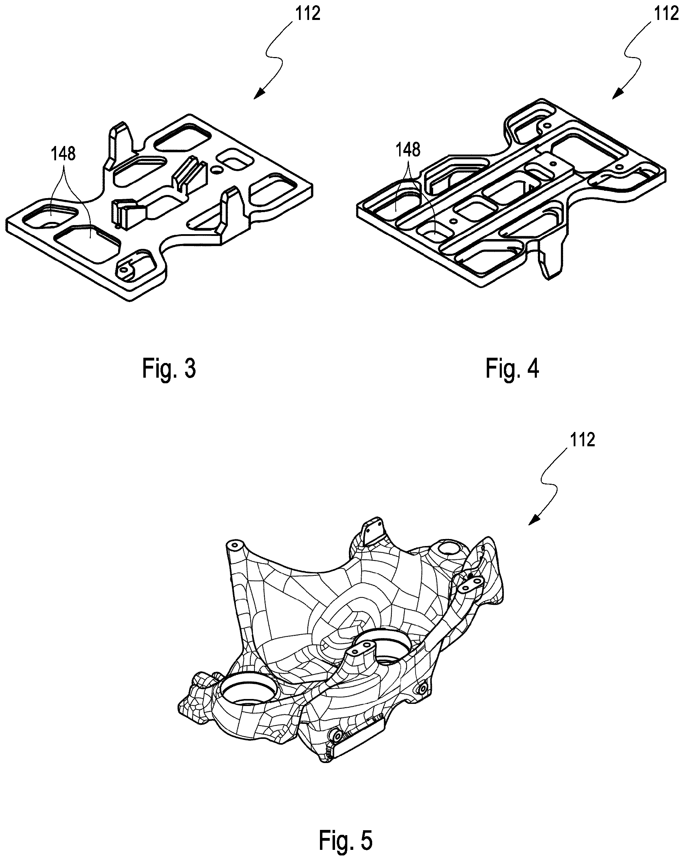

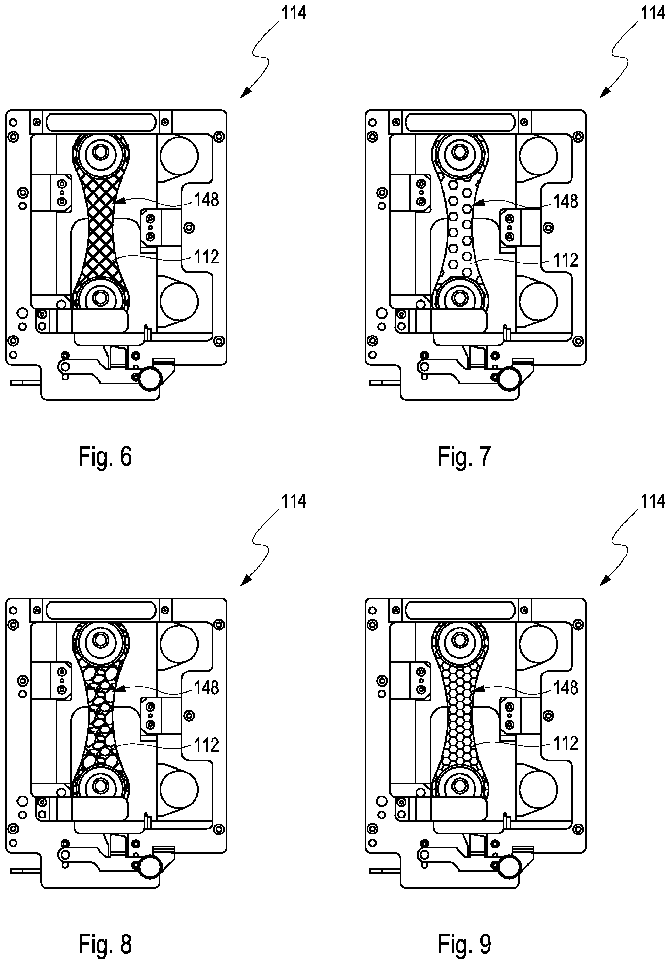

In Figure 1, a flow chart of a schematic overview of a method 110 for designing a complex part 112 of an in-vitro diagnostic instrument 114 is illustrated. As an example, different embodiments of a complex part 112 are shown in Figures 3 to 5, wherein different embodiments of a complex part 112 in an in-vitro diagnostic instrument 116 are shown in Figures 6 to 9.

The method 110 comprises the following steps:
i. (denoted by reference number 116) retrieving at least one target constraint 118;
ii. (denoted by reference number 120) retrieving at least one set of input parameters 122, wherein the input parameters 122 comprise at least one design target 124 for defining the complex part 112 of the in-vitro diagnostic instrument 114 and at least one constraint parameter of the complex part 112 of the in-vitro diagnostic instrument 114,
iii. (denoted by reference number 126) determining at least one design solution 128 of the complex part 112 by using at least one iterative algorithm considering the input parameters 122, wherein in each iteration the iterative algorithm comprises as a first substep (denoted by reference number 130) determining at least one candidate complex part 132 of the in-vitro diagnostic instrument 114,
   as a second substep (denoted by reference number 134) comparing the candidate complex part 132 to the target constraint 118, and
   as a third substep (denoted by reference number 136) rating the candidate complex part 132 depending on the comparison.

The method 110 comprises repeating step iii 126 until a predefined number of iterations is reached and/or until the determined candidate complex part 132 fulfills the target constraint 118 at least within predefined tolerances, thereby determining the design solution 128 of the complex part 112 of the in-vitro diagnostic instrument 114.

The method 110 may further comprise a step 138 of prototyping the complex part 112 of the in-vitro diagnostic instrument 114 obtained after repeating step iii 126 for the predefined number of iterations and/or for which the target constraint 118 is fulfilled at least within predefined tolerances. As an example, the prototyping step 138 comprises generating a prototyped complex part 140.

Further, the method 110 may comprise a step 142 of validating the prototyped complex part 140 by comparing at least one property of the prototyped complex part 140 with at least one property of a simulated complex part and/or rating the prototyped complex part 140 by using at least one property of the prototyped complex part 140 in comparison to the at least one target constraint 118.

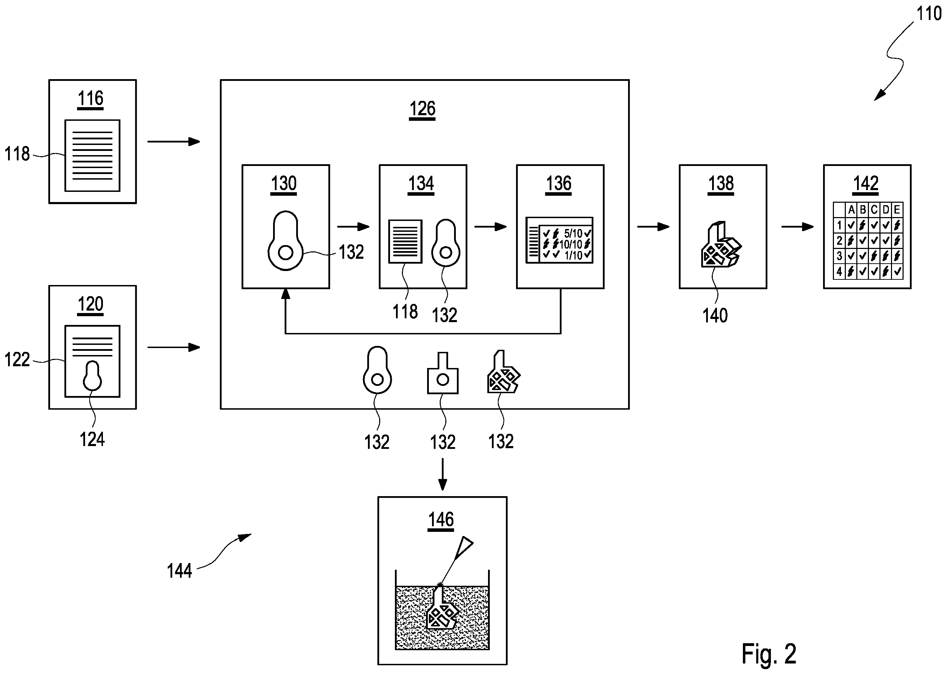

An embodiment of the method 110 additionally comprising the prototyping step 138 and the validating step 142 is shown in Figure 2, wherein a flow chart of a schematic overview of a method 144 for manufacturing a complex part 112 of an in-vitro diagnostic instrument 114 comprising the method 110 is illustrated. The manufacturing method 144 further comprises a step 146 of manufacturing the complex part 112 of the in-vitro diagnostic instrument 114 based on the design solution 128 of the complex part 112 by using at least one manufacturing process selected from the group consisting of: milling, computer numerical control milling; casting; molding; additive manufacturing, such as Powder Bed Fusion, Binder Jetting, Material Jetting, 3D printing; cutting, such as laser cutting and/or water jet cutting. Powder bed Fusion may be exemplarily illustrated as the manufacturing process in the manufacturing step 146 shown in Figure 2.

As an example, the manufacturing process may be selected by considering the design solution 128, e.g. taking into account a feasibility of manufacturing of the design solution 128. Further, at least one material for manufacturing the complex part 112 of the in-vitro diagnostic instrument 114 may also be selected by considering the design solution 128.

The different embodiments of a complex part 112 as illustrated in Figures 3 to 9 were determined by using the method 110 for designing a complex part 112 of an in-vitro diagnostic instrument 114. The complex part 112 may comprise at least one lattice structure 148. As an example, the complex part 112 may comprise at least one section and/or part having a lattice structure 148. For example, the complex part 112 may comprise at least one section arranged in a lattice structure 148, as may be seen in the complex parts illustrated in Figures 3 and 4. Additionally or alternatively, the complex part may comprise a regular lattice structure and/or pattern, as may be seen in the complex parts 112 illustrated in Figures 6 and 7. Additionally or alternatively, the complex part 112 may have an intrinsic lattice structure, such as by comprising at least one intrinsically lattice structured material, as may be seen in the complex parts 112 illustrated in Figure 8 and 9.

### List of reference numbers

- 110: method for designing a complex part of an in-vitro diagnostic instrument
- 112: complex part
- 114: in-vitro diagnostic instrument
- 116: step i.
- 118: target constraint
- 120: step ii.
- 122: input parameters
- 124: design target
- 126: step iii.
- 128: design solution
- 130: first substep of step iii.
- 132: candidate complex part
- 134: second substep of step iii.
- 136: third substep of step iii.
- 138: prototyping step
- 140: prototyped complex part
- 142: validating step
- 144: manufacturing method
- 146: manufacturing step
- 148: lattice structure

## Claims

1. Computer implemented method for designing a complex part (112) of an in-vitro diagnostic instrument (114), wherein the method comprises
i. retrieving at least one target constraint (118);
ii. retrieving at least one set of input parameters (122), wherein the input parameters (122) comprise at least one design target (124) for defining the complex part (112) of the in-vitro diagnostic instrument (114) and at least one constraint parameter of the complex part (112) of the in-vitro diagnostic instrument (114),
iii. determining at least one design solution (128) of the complex part (112) by using at least one iterative algorithm considering the input parameters (122), wherein in each iteration the iterative algorithm comprises determining at least one candidate complex part (132) of the in-vitro diagnostic instrument (114),
comparing the candidate complex part (132) to the target constraint (118), and
rating the candidate complex part (132) depending on the comparison,
wherein the method comprises repeating step iii until a predefined number of iterations is reached and/or until the determined candidate complex part (132) fulfills the target constraint (118) at least within predefined tolerances, thereby determining the design solution (128) of the complex part (112) of the in-vitro diagnostic instrument (114).

2. The method according to the preceding claim, wherein the complex part (112) of the in-vitro diagnostic instrument (114) comprises one or more of a carrier, a support, or a gear of a magnetic glass particle mixer.

3. The method according to any one of the preceding claims, wherein the target constraint (118) comprises at least one constraint selected from the group consisting of: a geometry constraint; a topology constraint; a pressure constraint; a shear force constraint; a mechanical stability constraint; a strength constraint; a weight constraint; a force distribution constraint; surface property constraint; a production machine constraint; a production constraint; and an economic constraint.

4. The method according to any one of the preceding claims, wherein the design target (124) for defining the complex part (112) of the in-vitro diagnostic instrument (114) comprises at least one set of shaping geometry parameters defining a shaping geometry of the complex part (112) and/or at least one starting digital model of the complex part (112), wherein the set of shaping geometry parameters defining a shaping geometry of the complex part (112) comprises a number of shaping parameters and/or starting values of shaping geometry parameters.

5. The method according to any one of the preceding claims, wherein the at least one constraint parameter of the complex part (112) comprises at least one of product properties, available build space, potential materials, potential manufacturing processes or cost targets.

6. The method according to any one of the preceding claims, wherein the iterative algorithm comprises analyzing the candidate complex part (132) by simulating a use of the complex part (112) by applying at least one numerical simulation on the candidate complex part (132) thereby determining at least one physical and/or mechanical property of the candidate complex part (132) of the in-vitro diagnostic instrument (114).

7. The method according to the preceding claim, wherein the analyzing of the candidate complex part (132) comprises one or both of discretizing the candidate complex part (132) into a mesh comprising a finite number of mesh elements, and using at least one Finite-Element-Method (FEM) simulation.

8. The method according to any one of the two preceding claims, wherein the comparing of the candidate complex part (132) to the target constraint (118) comprises comparing the determined physical and/or mechanical property to the target constraint (118) and adapting at least one of the shaping geometry parameters depending on the comparison, wherein the method comprises repeating step iii. with adapted shaping geometry parameters until the determined physical and/or mechanical property fulfills the target constraint (118) at least within predefined tolerances, thereby determining the design solution (128) of the complex part (112) of the in-vitro diagnostic instrument (114) with an adapted set of shaping geometry parameters for which the target constraint (118) is fulfilled at least within predefined tolerances.

9. The method according to any one of the preceding claims, wherein the iterative algorithm comprises at least one genetic algorithm.

10. The method according to any one of the preceding claims, wherein the iterative algorithm is designed for considering one or more of: at least one unchangeable area such as due to predefined interfaces to other components; acting forces; kinematics; predefined fixation points; manufacturing method; material; accessibility of tools during production and/or assembly; stackability; or nesting of individual components

11. The method according to any one of the preceding claims, wherein the method comprises outputting the design solution (128) obtained after repeating step iii for the predefined number of iterations and/or for which the target constraint (118) is fulfilled at least within predefined tolerances.

12. The method according to any one of the preceding claims, wherein the method further comprises prototyping the complex part (140) of the in-vitro diagnostic instrument (114) obtained after repeating step iii for the predefined number of iterations and/or for which the target constraint (118) is fulfilled at least within predefined tolerances.

13. The method according to the preceding claim, wherein the method comprises validating the prototyped complex part (140) by comparing at least one property of the prototyped complex part (140) with at least one property of a simulated complex part and/or rating the prototyped complex part (140) by using at least one property of the prototyped complex part (140) in comparison to the at least one target constraint (118).

14. A method for manufacturing a complex part (112) of an in-vitro diagnostic instrument (114), wherein the method comprises designing the complex part (112) of the in-vitro diagnostic instrument (114) by using a method for designing a complex part (112) according to any one of the preceding claims, wherein the method further comprises manufacturing the complex part (112) of the in-vitro diagnostic instrument (114) based on the designed complex part (112) by using at least one manufacturing process selected from the group consisting of: milling, computer numerical control milling; casting; molding; additive manufacturing, such as Powder Bed Fusion, Binder Jetting, Material Jetting, 3D printing; cutting, such as laser cutting and/or water jet cutting.

15. A complex part (112) of an in-vitro diagnostic instrument (114), wherein the complex part (112) is obtainable by using a method for manufacturing a complex part (112) according to any one of the preceding claims referring to a method for manufacturing a complex part (112).

16. A computer program comprising instructions, which, when the program is executed by a processor, cause the processor to perform at least step iii. of the method for designing a complex part (112) according to any one of the preceding claims referring to a method for designing a complex part (112).

17. A printing data set, comprising information which, when provided to a device for additive manufacturing, enable the device for additive manufacturing to produce a complex part (112) according to any one of the preceding claims referring to a complex part (112) of an in-vitro diagnostic instrument (114).

18. An in-vitro diagnostic instrument (114) comprising the complex part (112) according to claim 15, wherein the complex part is or comprises at least one function of one or more of a carrier of a magnetic glass particle mixer, a support of a magnetic glass particle mixer and a gear of a magnetic glass particle mixer.
